# EUROPÄISCHE PATENTANMELDUNG

(11) **EP 2 919 042 A1**
(43) Veröffentlichungstag der Anmeldung: **16.09.2015**
(21) Anmeldenummer: 15150851.2
(22) Anmeldetag: 12.01.2015
(51) Int. Cl.: G01V 8/00, B65G 43/08, G01S 13/04

(54) **Sensor und Verfahren zum Erkennen eines auf einer Rollenbahn befindlichen Objekts**

(30) Priorität: 11.03.2014 DE 102014103212
(71) Anmelder: SICK AG, 79183 Waldkirch (DE)
(72) Erfinder: Weber, Thomas, 77960 Seelbach (DE); Märkle, Christoph, 79102 Freiburg (DE); Jaksic, Davorin, 79211 Denzlingen (DE)
(74) Vertreter: Hehl, Ulrich

(57) **Zusammenfassung**

Es wird ein Sensor (10) für eine Rolle (12) einer Rollenbahn angegeben, der ein Sensorelement (24, 26) zum Erzeugen eines Sensorsignals und eine Auswertungseinheit (28) zum Erkennen eines auf der Rollenbahn befindlichen Objekts (36) anhand des Sensorsignals aufweist. Der Sensor (10) arbeitet nach dem Prinzip der Zeitbereichsreflektometrie, ist also ein TDR-Sensor.

## Beschreibung

Die Erfindung betrifft einen Sensor für eine Rolle einer Rollenbahn sowie ein Verfahren zum Erkennen von auf einer Rolle einer Rollenbahn befindlichen Objekten mit Hilfe eines Sensors nach dem Oberbegriff von Anspruch 1 beziehungsweise 11.

Rollenbahnen werden in der Regel als Rollenförderer in der Lager- und Fördertechnik eingesetzt. Einige der Rollen besitzen einen aktiven Antrieb, der sie in Rotation versetzt. Die übrigen passiven Rollen können über Bänder von den aktiven Rollen mitbewegt werden, oder die in Bewegung versetzten Objekte überbrücken solche Rollen aufgrund der Trägheit. Um den Materialfluss zu steuern, soll die Rollenbahn an bestimmten Positionen der Förderstrecke auf Anwesenheit von Objekten überwacht werden. Dazu sind verschiedenste Sensoren bekannt, wie optische, magnetische, induktive oder kapazitive Sensoren, die am entsprechenden Ort der Förderstrecke angebracht werden, um das Fördergut auf der Rollenbahn zu erfassen.

Die Montage derartiger Sensoren mit geeigneter Befestigungstechnik und Verkabelung zum Anschluss an eine Energieversorgung und ein Kommunikationsnetz, also an eine Steuereinheit oder in Kettenschaltung an weitere Sensoren, erfordert einen erheblichen Aufwand, zusätzlichen Platzbedarf sowie eine Einzeljustage der zahlreichen separat montierten Sensoren. Außerdem sind extern montierte Sensoren prinzipiell anfällig gegen mechanische Beeinträchtigungen durch die Umgebung, wie Verschmutzung oder Beschädigung der Detektionsflächen. Der Wartungsaufwand wird dadurch erhöht, und ferner wird eine robuste Gehäuseausführung zum mechanischen Schutz der Sensoren notwendig.

Daher wird im Stand der Technik, etwa der DE 101 31 019 A1, vorgeschlagen, eine Sensorik direkt in Rollen einer Rollenbahn zu integrieren. Die dabei genannten Technologien sind aber lediglich ohne Details aufgelistet und lassen jeweils gravierende Probleme ungelöst. Beispielsweise leidet die Verfügbarkeit optischer Sensoren häufig wegen Verunreinigungen. Andere Prinzipien, wie kapazitive oder induktive Sensoren, können Schwankungen des Sensorsignals aufgrund diverser Fremdeinflüsse, wie Unregelmäßigkeiten der Bewegung der Rolle durch Lagerspiel, Temperaturänderungen, Abnutzung oder Verschmutzung, nicht zuverlässig von den Effekten durch ein Objekt auf der Rolle unterscheiden. Darüber hilft auch nicht hinweg, wenn beispielsweise bei kapazitiven Sensoren Rollen aus Kunststoff ausgeblendet werden sollen, denn es wird nicht erläutert, wie das erreicht werden könnte. Zu einer ebenfalls genannten Ausführungsform mit einem Radar- oder Mikrowellensender bleibt außer der Erwähnung dieser Elemente das Funktionsprinzip gänzlich offen.

Die DE 20 2007 015 529 U1 offenbart eine Rolle für eine Rollenbahn mit einem integrierten kapazitiven Sensor, der zusätzlich auf einer der Förderseite abgewandten Seite einen Referenzsensor vorsieht. Ein Schaltsignal bei einem über die Rolle geförderten Objekt wird dann aus einem Differenzsignal zwischen dem Signal des eigentlichen Sensors und des Referenzsensors bestimmt. Außerdem wird vorgeschlagen, in Längsrichtung der Rolle mehrere Sensoren hintereinander anzuordnen.

Aus gänzlich anderen Anwendungsbereichen ist das Prinzip der Zeitbereichsreflektometrie (TDR, Time Domain Reflectometry) bekannt. Es wurde ursprünglich eingesetzt, um Leitungsbrüche in Überseeleitungen zu lokalisieren. Dazu wird ein Signal in die Leitung eingekoppelt und die Signallaufzeit gemessen, bis ein Echo von einer Diskontinuität des Leitungswellenwiderstands zurückkehrt, welche der Leitungsbruch verursacht. In anderen Anwendungen wie der Füllstandsmessung wird das Signal in eine Sonde eingekoppelt, die in den Behälter mit Medium hineinragt, dessen Füllstand gemessen werden soll. Die Diskontinuität des Leitungswiderstands verursacht hier der Luft-Mediumsübergang in Höhe des zu bestimmenden Füllstands. In einen Zusammenhang mit Rollenbahnen werden TDR-Sensoren im Stand der Technik nicht gebracht.

Es ist daher Aufgabe der Erfindung, eine zuverlässige Anwesenheitserkennung von Objekten auf einer Rollenbahn zu ermöglichen.

Diese Aufgabe wird durch einen Sensor für eine Rolle einer Rollenbahn sowie ein Verfahren zum Erkennen von auf einer Rolle einer Rollenbahn befindlichen Objekten mit Hilfe eines Sensors nach Anspruch 1 beziehungsweise 11 gelöst. Dabei geht die Erfindung von dem Grundgedanken aus, als Sensor zur Anwesenheitserkennung von Objekten auf der Rollenbahn einen Sensor nach dem Prinzip der Zeitbereichsreflektometrie, also einen TDR-Sensor zu nutzen. Wie einleitend erläutert, sind TDR-Sensoren an sich beispielsweise für die Füllstandsmessung oder Lokalisierung von Kabelbrüchen bekannt. Zur bloßen Anwesenheitserkennung werden TDR-Sensoren herkömmlich nicht eingesetzt.

Die Erfindung hat den Vorteil, dass durch den Einsatz einer für die Anwendung neuen Technologie die Nachteile der bislang vorgeschlagenen Lösungen vermieden werden. Beispielsweise ist ein TDR-Sensor im Gegensatz zu optischen Sensoren unempfindlich gegen Staub und Verunreinigungen. Anders als ein kapazitiver Sensor ermöglicht ein TDR-Sensor auch Rollen aus Metall und erfordert kein Dielektrikum, so dass die Rollen widerstandsfähig und langlebig sind. So wird eine besonders robuste Anwesenheitserkennung für Objekte auf einer Rollenbahn möglich.

Der Sensor weist bevorzugt einen Sender und einen Empfänger zum Aussenden und Empfangen des an einer Sonde geführten elektromagnetischen Sensorsignals auf, insbesondere eines Mikrowellenpulses, wobei die Auswertungseinheit dafür ausgebildet ist, Objekte anhand von Reflexionen des auf der Sonde geführten Signals zu erkennen. Damit wird der TDR-Sensor ausgestaltet, um ein Sensorsignal zu erzeugen, erfassen und auszuwerten. Im Allgemeinen ist das Sensorsignal ein Kurvenzug, der die Reflexionen oder Echos an den Diskontinuitäten längs der Sonde enthält. Dieser Kurvenzug kann abgetastet und dann digital in seinem gesamten Informationsgehalt bewertet, aber auch analog beispielsweise anhand von Schwellen ausgewertet werden. Eine Auswertung anhand von Reflexionen kann die Erkennung durch das Objekt erzeugter Echos, aber auch Veränderungen erwarteter oder früher erfasster Echos beinhalten.

Die Sonde ist vorzugsweise in der Rolle untergebracht. Damit wird ein kompakter Sensor geschaffen, der keine oder weniger störende äußere Aufbauten umfasst.

Vorzugsweise fungiert die Rolle als Sonde. So wird also eine Rolle der Rollenbahn selbst genutzt, um die Signale des TDR-Sensors als dessen Sonde zu führen, und damit ein besonders kompakter Aufbau erreicht. Die Rolle hat üblicherweise eine starre Drehachse sowie die eigentliche Rolle, d.h. ein zylindrisches Element, das um die Drehachse rotiert und dabei an seinem Außenumfang Objekte fördert. Wenn die Rolle als Sonde fungiert, wird das Sensorsignal vorzugsweise auf die nicht rotierende Drehachse gekoppelt. Die Kopplung zwischen dem TDR-Sensor und der Rolle erfolgt beispielsweise kapazitiv oder direkt durch ein Verbindungsstück. Die Lagerung der Rolle stellt dabei kein Problem dar. Die Hochfrequenzwelle des Sensorsignals breitet sich aufgrund der kapazitiven Kopplung oder gar leitenden Verbindung mühelos entlang der Rolle aus. Alternativ zum Ausnutzen der Rolle als Sonde ist prinzipiell auch eine zusätzliche Sonde denkbar, aber dadurch gehen viele Vorteile verloren.

Der Sensor ist bevorzugt in einen Rahmen der Rollenbahn integriert. Das vermeidet zusätzliche Elemente und führt zu verringertem Platzbedarf an der Rollenbahn. In den Rahmen integriert ist genaugenommen ein Sensorkopf, also beispielsweise Sender, Empfänger und Auswertung, nicht die Sonde. Letztere ist nicht am Rahmen, sondern an der Rolle angeordnet, beziehungsweise die Rolle ist selbst die Sonde.

Die Auswertungseinheit ist bevorzugt dafür ausgebildet, die Position eines Referenzpulses in dem Sensorsignal festzulegen und die Anwesenheit eines Objekts anhand einer Verschiebung des Referenzpulses zu erkennen. Pulse, Reflexionen oder Echos in dem Sensorsignal entstehen nicht nur dort, wo sich ein Objekt befindet, sondern auch an anderen Übergangsstellen, etwa am Rollenanfang oder Rollenende. Solche Echos können als Referenzpulse genutzt werden, weil sie stets und unabhängig von der Anwesenheit eines Objekts auftreten. Der Messeffekt ist, dass ein Objekt die Dielektrizitätskonstante und damit die Ausbreitungsgeschwindigkeit des Sensorsignals in seiner Umgebung verändert. Die resultierende Verschiebung des stets nachweisbaren Referenzpulses kann oft zuverlässiger ausgewertet werden als das Auftreten oder Nichtauftreten eines Objektechos, welches etwa im Falle dünner, trockener Objekte für eine Pulserkennung insbesondere mittels einfacher Schwellenauswertung zu niedrig ausfallen kann.

Die Auswertungseinheit ist bevorzugt dafür ausgebildet, aus einer Signallaufzeit des Sensorsignals bis zu einer Objektkante die Lage eines erkannten Objekts auf der Rollenbahn zu bestimmen. Das TDR-Prinzip liefert mehr Messinformationen als die bloße Anwesenheit, die in dieser Ausführungsform erfasst wird. Die aus Sicht des Sensorkopfes nahe und mit kleinerer Amplitude auch die ferne Objektkante können aufgrund der Signallaufzeiten lokalisiert werden. Das ergibt eine Positions- und Größeninformation des Objekts. Durch Mehrfachmessung in mehreren Rollen mit integriertem Sensor und/oder durch wiederholte Messung unter Berücksichtigung der Fördergeschwindigkeit können diese Positions- und Größeninformationen verfeinert werden.

Die Auswertungseinheit ist bevorzugt dafür ausgebildet, vorab ein Kalibrationssignal in Abwesenheit von Objekten zu bestimmen und dann für die Erkennung von Objekten zu berücksichtigen. Damit werden in einer Art Leerkalibration diejenigen Einflüsse auf das Sensorsignal erfasst, die nicht von einem zu erkennenden Objekt verursacht sind. Sie werden dann im Betrieb in einfacher Weise durch Abziehen des Kalibrationssignals von dem jeweiligen Sensorsignal berücksichtigt. In einer Ausführungsform, die auf der Verschiebung eines Referenzpulses basiert, kann der Signalbereich des Referenzpulses von der Kompensation mit dem Kalibrationssignal ausgespart werden. Andererseits verändert eine durch ein Objekt verursachte Verschiebung des Referenzpulses das Sensorsignal auch dann nachweisbar, wenn das Kalibrationssignal den Referenzpuls ohne eine solche Verschiebung eliminiert hätte.

Die Auswertungseinheit ist bevorzugt dafür ausgebildet, das Kalibrationssignal im Betrieb anhand einer Historie von Sensorsignalen zu bestimmen oder anzupassen. Hier erfolgt also die Leerkalibration ohne Objekt nicht nur anfänglich, sondern dynamisch. Letztlich handelt es sich vorzugsweise um ein Filter mit Tiefpasseigenschaften, das also schnelle Änderungen durch Objekte und weit zurückliegende Einflüsse auf das Sensorsignal vergisst. Die Filterparameter sollten so eingestellt sein, dass langsam bewegte Objekte oder Objekte im vorübergehenden Stau noch keine Anpassung auslösen, sondern nur langfristige Effekte wie Ablagerungen an der Rolle. Eine anfängliche Leerkalibration kann als ein Faktor in die Auslegung des Filters eingehen.

In vorteilhafter Weiterbildung ist eine Rolle mit einem darin integrierten erfindungsgemäßen Sensor vorgesehen. Diese Rolle kann einen eigenen Antrieb aufweisen, also eine aktive Rolle sein. Dann nutzt der Sensor vorzugsweise die Versorgungs- und Steuerungsleitungen dieses Antriebs mit. Der Sensor kann aber auch in eine passive Rolle ohne eigenen Antrieb eingesetzt sein. Dann benötigt der Sensor eigene Anschlüsse oder versorgt sich und kommuniziert drahtlos. Denkbar ist auch, den Sensor mit einer Batterie oder einer eigenen Energieerzeugung aus der Drehbewegung auszurüsten.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung einer Rolle mit einem TDR-Sensor und dessen Sensorsignal bei Abwesenheit von Objekten;
- Fig. 2: eine schematische Schnittdarstellung einer Rolle mit einem TDR-Sensor und dessen Sensorsignal in Anwesenheit eines Objekts; und
- Fig. 3: eine weitere Ausführungsform einer Rolle mit einem TDR-Sensor mit einer weiteren Ankopplungsvariante.

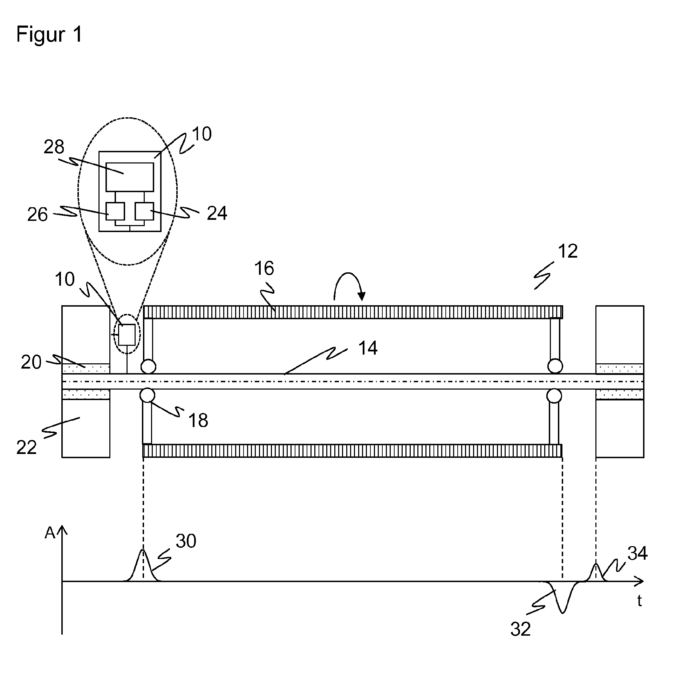

Figur 1 zeigt eine Schnittdarstellung eines TDR-Sensors 10 (Time Domain Reflectometry, Zeitbereichsreflektometrie), der in eine Rolle 12 einer Rollenbahn eingesetzt ist. Die Rolle 12 weist eine leitende, meist metallische Drehachse 14 auf, um die sich mit Hilfe einer Kugellagerung 18 das eigentliche Rollelement 16 der Rolle 12 dreht. In anderen Ausführungsformen kann auch die Drehachse 14 rotieren. Die Drehachse 14 wird in einer Isolierung 20 von einem Rahmen 22 gehalten. Der TDR-Sensor 10 koppelt einerseits an die Drehachse 14 und andererseits an den Rahmen 22.

Der TDR-Sensor 10 ist in Figur 1 an seiner möglichen Anschlussposition an der Rolle 12 nur als kleiner Block und deshalb, wie durch gestrichelte Linien veranschaulicht, oberhalb der Rolle 12 ein weiteres Mal vergrößert dargestellt. Der Sensor 10 weist, wie in dem vergrößert gezeigten Sensorkopf zu erkennen, einen Sender 24, einen Empfänger 26 sowie eine damit verbundene Steuer- und Auswertungseinheit 28 auf.

Bei einer Messung zur Anwesenheitserkennung von Objekten auf der Rolle 12 wird nun gemäß dem einleitend beschriebenen TDR-Prinzip von dem Sender 24 ein Hochfrequenzsignal erzeugt, insbesondere ein Mikrowellenpuls, und auf die Rolle 12 beziehungsweise deren Drehachse 14 gekoppelt, wo es sich als elektromagnetische Welle an deren Oberfläche ausbreitet. An Impedanzsprüngen wird das Hochfrequenzsignal partiell reflektiert, und diese Reflexionen oder Echos gelangen über den Empfänger 26 zur weiteren Verarbeitung zu der Steuer- und Auswertungseinheit 28. Impedanzsprünge entstehen an Objekten entlang des Ausbreitungswegs, aber auch an Elementen der Rolle 12 selbst, wobei Objekte mit hoher Dielektrizitätskonstante höhere Reflexionen erzeugen als solche mit kleiner Dielektrizitätskonstante. Deshalb kann die Steuer- und Auswertungseinheit 28 aus den Echos anwesende Objekte erkennen und möglicherweise auch eine Zusatzinformation gewinnen, etwa die Position oder Größe eines anwesenden Objekts anhand von Signallaufzeiten bestimmen.

Die Rolle 12 dient somit selbst als Sonde des Sensors 10. Die Einkopplung der elektromagnetischen Wellen von dem Sensorkopf auf die Rolle 12 kann sehr einfach und auf verschiedene Weise realisiert werden, beispielsweise kapazitiv oder durch direkte Leitungsverbindung. Durch die Isolierung 20 ist die Rolle 12 von dem Rahmen 22 isoliert befestigt. Der Rahmen 22 oder benachbarte weitere Rollen werden als Gegenpotential der Hochfrequenzeinkopplung genutzt.

Im unteren Teil der Figur 1 ist schematisch ein beispielhaftes Sensorsignal in Abwesenheit von Objekten auf der Rolle 12 dargestellt. Dabei ist auf der X-Achse die Zeit, die bis auf einen Proportionalitätsfaktor der Strecke längs der Rolle 12 entspricht, und auf der Y-Achse in beliebigen Einheiten die Amplitude des Sensorsignals aufgetragen. An der aus Sicht des TDR-Sensors 10 vorderen Kante der Rolle 12 ergibt sich bei beliebig festgelegtem Vorzeichen eine erste Rollenreflexion 30, an der hinteren Kante der Rolle 12 eine zweite Rollenreflexion 32 mit umgekehrtem Vorzeichen. Eine Endreflexion 34 entsteht am jenseitigen Übergang der Drehachse 14 in den Rahmen 20. Die Reflexionen 30, 32, 34 sind demnach keine echten Messeffekte, sondern eher Artefakte der durch die Rolle 12 und ihre Lagerung in dem Rahmen 20 bedingten Messumgebung.

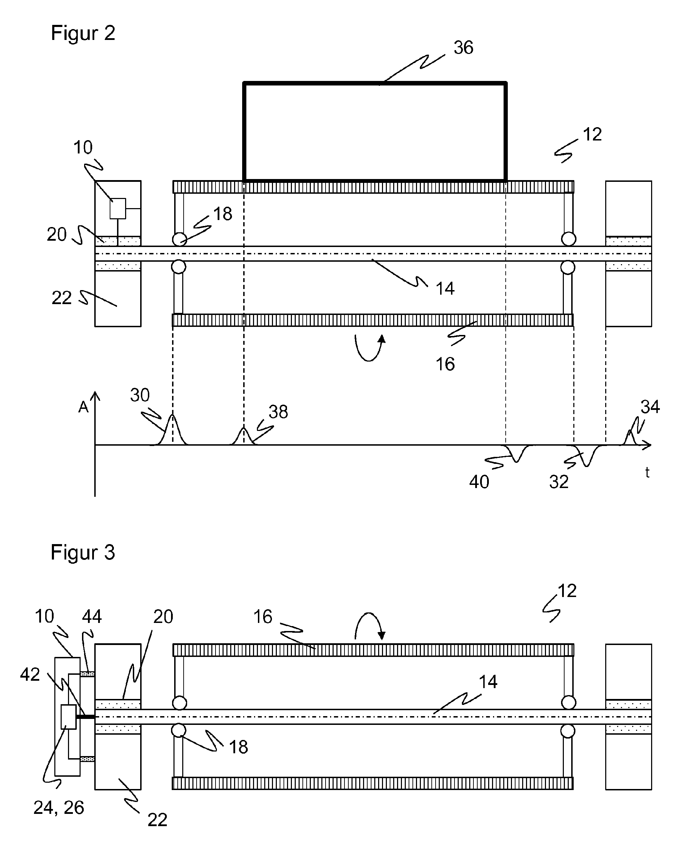

Figur 2 zeigt zum Vergleich den TDR-Sensor 10 und die Rolle 12 ein weiteres Mal, nun aber mit einem Objekt 36 auf der Rolle 12. Wie in der gesamten Beschreibung sind dabei die gleichen oder einander entsprechenden Merkmale mit den gleichen Bezugszeichen versehen. Im Unterschied zu Figur 1 ist der Sensorkopf des TDR-Sensors 10 in Figur 2 in den Rahmen integriert und dadurch von außen nicht sichtbar. Dieser besonders kompakte Aufbau soll nur eine vorteilhafte Ausgestaltungsvariante illustrieren und ist für den weiteren Vergleich der Situation mit und ohne Objekt 36 ohne Bedeutung.

Auch in Figur 2 ist im unteren Teil schematisch ein beispielhaftes Sensorsignal nun in Anwesenheit des Objekts 36 auf der Rolle 12 dargestellt. Die erste Rollenreflexion 30 ist die gleiche wie in Figur 1, denn das Objekt 36 beeinflusst den Signalweg bis zu der vorderen Kante der Rolle 12 nicht. Dahinter entsteht nun aber eine zusätzliche erste Objektreflexion 38 an der vorderen Kante des Objekts 36 und eine zusätzliche zweite Objektreflexion 40 an der hinteren Kante des Objekts 36. Die zweite Objektreflexion 40 ist etwas verzögert und stimmt deshalb in ihrer Position nicht mit der hinteren Kante des Objekts 36 überein, denn das Objekt 36 beeinflusst die Ausbreitungsgeschwindigkeit des Hochfrequenzsignals längs der Rolle 12. Diese Verzögerung betrifft auch die zweite Rollenreflexion 32 und die Endreflexion 34. Zudem sind zweite Rollenreflexion 32 und Endreflexion 34 gegenüber Figur 1 in ihrer Amplitude verkleinert, da bereits zuvor ein zusätzlicher Teil der Signalenergie durch die beiden Objektreflexionen 38, 40 zurückreflektiert wurde.

Eine einfache Möglichkeit, die Anwesenheit des Objekts 36 festzustellen, ist eine Überwachung, ob Objektreflexionen 38, 40 auftreten. Das kann durch eine Schwellbewertung geschehen, wobei die Schwelle im Kontext der gewünschten Empfindlichkeit des Systems, etwa ob kleine Objekte wie Briefe erkannt werden sollen, und der Störeinflüsse wie Verschmutzung, Feuchtigkeit und EMV gewählt wird. Da wie erläutert auch ohne das Objekt 36 Reflexionen 30, 32, 34 auftreten, muss zum Ausschluss von Verwechslungen der Signalbereich entsprechend gewählt werden. Darüber hinaus sind die Signalverläufe gemäß Figur 1 und 2 idealisiert, und es können deshalb durch diverse Fremdeinflüsse und Unregelmäßigkeiten an der Rolle 12 auch im relevanten Bereich der Rolle 12 Störpulse auftreten, die nicht ohne Weiteres durch eine Schwelle von Objektreflexionen 38, 40 unterschieden werden. Weiter unten werden Filter und Kalibrationen beschrieben, um mit diesem Problem umzugehen.

Besonders wenn das Objekt 36 das elektromagnetische Feld nur gering beeinflusst, sei es aufgrund kleiner Ausdehnung oder kleiner Dielektrizitätskonstante, wie im Beispiel von trockenem Papier, kommt aber auch eine Störausblendung an ihre Grenzen. Die Objektreflexionen 38, 40 werden dann unter Umständen so klein, dass eine direkte Pulsauswertung nicht mehr zuverlässig ist. Deshalb bestimmt ein alternatives vorteilhaftes Auswertungsverfahren, das ebenso für Objekte 36 mit deutlichen Objektreflexionen 38, 40 funktioniert beziehungsweise kumulativ angewandt werden kann, die Verschiebung eines markanten Referenzpulses durch die Änderung der Ausbreitungsgeschwindigkeit in Anwesenheit des Objekts 36. Als Referenzpuls dient beispielsweise die zweite Rollenreflexion 32 oder die Endreflexion 34. Der Referenzpuls entsteht an Impedanzsprüngen des Aufbaus der Rolle 12 und bleibt unabhängig von Eigenschaften des Objekts 36 gut erkennbar. Wird ein Referenzpuls im Ausbreitungsweg des Sensorsignals hinter möglichen Positionen von Objekten 36 gewählt, so wird dieser Referenzpuls weiterhin robust nachgewiesen und das Objekt 36 anhand der zeitlichen Verzögerung des Referenzpulses detektiert.

Das TDR-Prinzip ist ursprünglich ein Signallaufzeitverfahren und demnach in der Lage, auch den Abstand zu einem Echo zu messen. Dadurch kann zumindest die Position der vorderen Kante des Objekts 36 aus der zeitlichen Lage der ersten Objektreflexion 38 in dem Sensorsignal bestimmt werden. Bei der Bestimmung der Position der hinteren Kante des Objekts aus der zeitlichen Lage der zweiten Objektreflexion 40 ist zu beachten, dass hier das Objekt 36 die Signalausbreitung bereits verzögert. Deshalb kann die hintere Kante nur grob geschätzt oder anhand von Wissen oder Annahmen über die Dielektrizitätskonstante des Objekts 36 bestimmt werden. Die Zeit- beziehungsweise Ortsinformationen über die diversen Echos können außerdem für eine einfache Störausblendung verwendet werden. Objektreflexionen 38, 40 können nur in einem bestimmten Bereich auftreten, beispielsweise nicht unterhalb eines Mindestabstands zu dem Sensorkopf.

Als eine Möglichkeit zur oben angesprochenen Filterung oder Kalibration des Sensorsignals kann anfänglich ein Sensorsignal als Kalibrationssignal oder Leerkurve eingelernt werden, während sich kein Objekt 36 auf der Rolle 12 befindet. Wird dann später das Kalibrationssignal von dem jeweils gemessenen Sensorsignal abgezogen, so sind die durch die Rolle 12 selbst bedingten Reflexionen und Störeinflüsse eliminiert. Dabei ist zu beachten, dass bei einem Verfahren, das die Verschiebung eines Referenzpulses 32, 34 überwacht, die Differenzbildung mit dem Kalibrationssignal auch die Referenzpulse verändert oder gar eliminiert. Abhilfe schafft hier, den Bereich des Referenzpulses 32, 34 von der Differenzbildung auszuschließen oder nicht auf eine Verschiebung des Referenzpulses zu überwachen, sondern auf signifikante Veränderungen im erwarteten Signalbereich des Referenzpulses 32, 34.

Ein einmalig bestimmtes Kalibrationssignal reicht unter Umständen nicht aus, um Störeinflüsse zu beseitigen. Beispielsweise können starke Schmutzablagerungen, Feuchtigkeit oder Änderungen in den Lagern 18 der Rolle 12 zu einer signifikanten Veränderung des Hochfrequenzverhaltens führen. Deshalb wird in einer weiteren Ausführungsform eine dynamische Störausblendung vorgeschlagen. Eine entsprechende Filterung kann sich zunächst auf die Längserstreckung der Rolle 12 beziehen, die das Signal-Rausch-Verhältnis verbessern kann.

Die dynamische Störausblendung soll aber vorzugsweise eine Historie von mehreren Messungen und den dabei gewonnenen Sensorsignalen berücksichtigen. Das jeweils aktuell anzuwendende Kalibrationssignal wird also in einer Scharfilterung aus mehreren früheren Sensorsignalen bestimmt. Um den Speicheraufwand zu reduzieren, ist ein rekursives Filter denkbar, das also das existierende Kalibrationssignal jeweils anhand des aktuellen Sensorsignals oder einer nur kurzen Historie beispielsweise auch noch des vorherigen Sensorsignals bestimmt.

Das Filter arbeitet im Wesentlichen als Tiefpassfilter. Dadurch werden kurzzeitige Effekte, wie das Vorbeifördern von Objekten 36 auch bei langsamer Förderung oder Förderstau, und lange zurückliegende Effekte nicht mehr berücksichtigt. Die dafür notwendigen Zeitkonstanten lassen sich ohne Weiteres finden, da die auszublendenden Störungen, wie Ablagerungen oder Temperaturschwankungen, in aller Regel um Größenordnungen langsamere Veränderungen bedingen. Außerdem ist denkbar, die dynamische Ausblendung immer dann auszusetzen, wenn gerade ein Objekt 36 erkannt wird. Dadurch fließen Sensorsignale, die in Anwesenheit von Objekten 36 gemessen wurden, gar nicht in das Filter ein.

Da die gesamte Messanordnung im industriellen Umfeld erheblichen elektromagnetischen Störungen ausgesetzt sein kann, sind Maßnahmen denkbar, die das TDR-Verfahren gegen solche Störungen robust machen, beispielsweise ein Zeitsprungverfahren. Dabei wird in verschiedenen Wiederholungen das Sensorsignal jeweils an pseudo-zufällig anderen Stützstellen gemessen, und die zeitliche Reihenfolge wird im Anschluss anhand der bekannten Zufallssequenz rekonstruiert. Umgekehrt sollte auch der TDR-Sensor 10 selbst alle geforderten Grenzwerte für die Emission elektromagnetischer Energie einhalten. Eine einfache Methode dafür ist, zu bestimmten Zeitpunkten Sendepausen einzulegen.

Figur 3 zeigt noch einmal eine andere Ausführungsform des TDR-Sensors 10 und der Rolle 12, um eine weitere Möglichkeit der Anbringung und Ankopplung zu erläutern. Dabei wird die Elektronik des TDR-Sensors 10 von außen an dem Rahmen 22 angebracht, so dass die Hochfrequenzsignale koaxial auf die Drehachse 14 gekoppelt werden können. Als Kopplungselement dient ein zentral angeordneter Stiftkontakt 42. Radial versetzt dazu sind federnde Elemente 44 vorgesehen, wie hochfrequenzleitfähige und SMD-bestückbare Dichtungen oder mechanische Federkontakte, die einen Toleranzausgleich zulassen.

Der TDR-Sensor 10 wurde am Beispiel der Auswertung von Echos eines Mikrowellenpulses beschrieben. Das Hochfrequenzsignal ist aber weder notwendig auf den Frequenzbereich von Mikrowellen noch eine Pulsform beschränkt. Auch nicht pulsförmige Amplitudenmodulationen erzeugen auswertbare Echos, solange aus der Amplitudenmodulation ein Zeitpunkt abgeleitet werden kann, wie beispielsweise bei Mehrfachpulsen oder Sprungfunktionen. Alternativ zu der Amplitude des Hochfrequenzsignals kann auch dessen Frequenz (insbesondere FMCW-Verfahren) oder Phase moduliert werden. Schließlich ist denkbar, auf die Anwesenheit von Objekten 36 auf der Rolle in einem transmissiven Aufbau zu schließen. Sender 24 und Empfänger 26 sind dabei nicht auf derselben Seite der Rolle 12 angeordnet, sondern an gegenüberliegenden Enden. Ein Objekt 36 auf der Rolle verändert durch die von ihm ausgelösten Impedanzunterschiede die Echos, die das auf der Rolle laufende Signal erzeugt. Deshalb kann auch aus dem transmittierten Signal auf die Anwesenheit oder Abwesenheit von Objekten 36 geschlossen werden.

## Patentansprüche

1. Sensor (10) für eine Rolle (12) einer Rollenbahn, der ein Sensorelement (24, 26) zum Erzeugen eines Sensorsignals und eine Auswertungseinheit (28) zum Erkennen eines auf der Rollenbahn befindlichen Objekts (36) anhand des Sensorsignals aufweist,
**dadurch gekennzeichnet,**
**dass** der Sensor (10) ein TDR-Sensor ist.

2. Sensor (10) nach Anspruch 1,
der einen Sender (24) und einen Empfänger (26) zum Aussenden und Empfangen des an einer Sonde (12, 14) geführten elektromagnetischen Sensorsignals aufweist, insbesondere eines Mikrowellenpulses, wobei die Auswertungseinheit (28) dafür ausgebildet ist, Objekte (36) anhand von Reflexionen des auf der Sonde (12, 14) geführten Signals zu erkennen.

3. Sensor (10) nach Anspruch 2,
wobei die Sonde (12, 14) in der Rolle (12) untergebracht ist.

4. Sensor (10) nach Anspruch 2 oder 3,
wobei die Rolle (12, 14) als Sonde fungiert.

5. Sensor (10) nach einem der vorhergehenden Ansprüche,
wobei der Sensor (10) in einen Rahmen (22) der Rollenbahn integriert ist.

6. Sensor (10) nach einem der vorhergehenden Ansprüche,
wobei die Auswertungseinheit (28) dafür ausgebildet ist, die Position eines Referenzpulses (32, 34) in dem Sensorsignal festzulegen und die Anwesenheit eines Objekts (36) anhand einer Verschiebung des Referenzpulses (32, 34) zu erkennen.

7. Sensor (10) nach einem der vorhergehenden Ansprüche,
wobei die Auswertungseinheit (28) dafür ausgebildet ist, aus einer Signallaufzeit des Sensorsignals bis zu einer Objektkante die Lage eines erkannten Objekts (36) auf der Rollenbahn zu bestimmen.

8. Sensor (10) nach einem der vorhergehenden Ansprüche,
wobei die Auswertungseinheit (28) dafür ausgebildet ist, vorab ein Kalibrationssignal in Abwesenheit von Objekten (36) zu bestimmen und dann für die Erkennung von Objekten (36) zu berücksichtigen.

9. Sensor (10) nach einem der vorhergehenden Ansprüche,
wobei die Auswertungseinheit (28) dafür ausgebildet ist, das Kalibrationssignal im Betrieb anhand einer Historie von Sensorsignalen zu bestimmen oder anzupassen.

10. Rolle (12) mit einem Sensor (10) nach einem der vorhergehenden Ansprüche.

11. Verfahren zum Erkennen von auf einer Rolle (12) einer Rollenbahn befindlichen Objekten (36) mit Hilfe eines Sensors (10),
**dadurch gekennzeichnet,**
**dass** der Sensor (10) nach dem TDR-Prinzip arbeitet, indem ein elektromagnetisches Sensorsignal, insbesondere ein Mikrowellenpuls, längs der Rolle (12, 14) geführt und auf Einflüsse durch auf der Rollenbahn befindliche Objekte (36) ausgewertet wird.
